# EUROPEAN PATENT APPLICATION

(11) **EP 2 921 969 A1**
(43) Date of publication of application: **23.09.2015**
(21) Application number: 15158478.6
(22) Date of filing: 10.03.2015
(51) Int. Cl.: G06F 17/21, G06F 17/22, G06F 3/048

(54) **Method and apparatus for centering and zooming webpage and electronic device**

(30) Priority: 21.03.2014 CN 201410108833
(71) Applicant: Xiaomi Inc., Beijing 100085 (CN)
(72) Inventor: Du, Zhongyi, 100085 Beijing (CN); Zuo, Jinglong, 100085 Beijing (CN); Xu, Guoshi, 100085 Beijing (CN)
(74) Representative: Delumeau, François Guy

(57) **Abstract**

Embodiments of the present disclosure provide a method and an apparatus for adjusting a webpage and an electronic device. The method comprises: receiving (102) a webpage adjusting instruction, determining (104) a target content node from all content nodes of the webpage according to coordinates of at least one touch point and a document object model tree of the webpage, and adjusting (106) a center of a display area corresponding to the target content node to a center of a screen.

## Description

### TECHNICAL FIELD

The present disclosure generally relates to computer field, and more particularly to a method and an apparatus for adjusting a webpage and an electronic device.

### BACKGROUND

With the development of mobile network and the popularity of portable mobile terminals, more and more users carry out network activities through intelligent mobile phones, tablet personal computers (PCs), eBook readers or other electronic equipment, while web browsing is one of the most important network activities.

As taking account of the portability, the screen size of the intelligent mobile phones, tablet PCs, eBook readers and other electronic equipment won't be too large. However, most of the existing webpages in current network are developed based on personal computers (PCs), and portable mobile terminals need to adjust webpages when displaying webpages to make it easy for users to browse. In the related art, portable mobile terminals typically offer webpage adjusting function, so that users can browse all contents of the webpage through a gesture for zooming in the webpage to a suitable size and a drag gesture for moving the webpage.

### SUMMARY

Embodiments of the present disclosure provide a method and an apparatus for adjusting a webpage and an electronic device, to overcome problems that a user needs to drag a webpage manually to make the webpage move, and needs to carry out multiple adjustments to adjust one piece of content to a location suitable for browsing in the related art. The technical solutions are as follows:

According to a first aspect, the invention related to a method for adjusting a webpage, comprising: receiving a webpage adjusting instruction generated when detecting a touch operation on a webpage currently displayed and containing coordinates of at least one touch point; determining a target content node from all content nodes of the webpage according to the coordinates of the at least one touch point and a document object model tree of the webpage; and adjusting a center of a display area corresponding to the target content node to a center of a screen.

In a particular embodiment, the method further comprises: calculating a scaling ratio according to a current size of the display area corresponding to the target content node and a size of the screen; and scaling the webpage according to the scaling ratio.

In a particular embodiment, determining a target content node from all content nodes of the webpage according to the coordinates of the at least one touch point and a document object model tree of the webpage comprises: determining a first candidate node set according to the document object model tree if the coordinates of the at least one touch point contain coordinates of one touch point, in which the first candidate node set contains all content nodes of the coordinates of the one touch point; and determining a content node with a display width smaller than a screen width and with a largest display area in the first candidate node set as the target content node.

In a particular embodiment, determining a target content node from all content nodes of the webpage according to the coordinates of the at least one touch point and a document object model tree of the webpage comprises: determining a second candidate node set according to the document object model tree if the coordinates of the at least one touch point are coordinates of a closed curve, in which the second candidate node set comprises content nodes with a ratio between an intersection area and an area delimited by the closed curve larger than a preset proportion threshold, in which the intersection area is formed by the content nodes interacting with the area delimited by the closed curve; and determining a content node with a smallest display area in the second candidate node set as the target content node.

In a particular embodiment, determining a target content node from all content nodes of the webpage according to the coordinates of the at least one touch point and a document object model tree of the webpage comprises: determining a third candidate node set according to the document object model tree if the coordinates of the at least one touch point are coordinates of a closed curve, in which the third candidate node set comprises content nodes with a largest ratio between an intersection area and an area delimited by the closed curve, in which the intersection area is formed by the content nodes interacting with the area delimited by the closed curve; and determining a content node with a largest display area in the third candidate node set as the target content node.

In a particular embodiment, the method further comprises: detecting whether an average display area of characters in a plain text node of the webpage is less than a preset area threshold before receiving the webpage adjusting instruction; and if the average display area of characters in the plain text node of the webpage is less than the preset area threshold, performing the step of receiving the webpage adjusting instruction.

According to a second aspect, the invention relates to an apparatus for adjusting a webpage, comprising: an instruction receiving module, configured to receive a webpage adjusting instruction generated when detecting a touch operation on a webpage currently displayed, and containing coordinates of at least one touch point; a target node determining module, configured to determine a target content node from all content nodes of the webpage according to the coordinates of the at least one touch point and a document object model tree of the webpage; and an adjusting module, configured to adjust a center of a display area corresponding to the target content node to a center of a screen.

In a particular embodiment, the apparatus further comprises: a calculating module, configured to calculate a scaling ratio according to a current size of the display area corresponding to the target content node and a size of the screen; and a scaling module, configured to scaling the webpage according to the scaling ratio.

In a particular embodiment, the target node determining module comprises: a first determining unit, configured to determine a first candidate node set according to the document object model tree if the coordinates of the at least one touch point contain coordinates of one touch point, in which the first candidate node set contains all content nodes of the coordinates of the one touch point; and a second determining unit, configured to determine a content node with a display width smaller than a screen width and with a largest display area in the first candidate node set as the target content node.

In a particular embodiment, the target node determining module comprises: a third determining unit, configured to determine a second candidate node set according to the document object model tree if the coordinates of the at least one touch point are coordinates of a closed curve, in which the second candidate node set comprises content nodes with a ratio between an intersection area and an area delimited by the closed curve larger than a preset proportion threshold, in which the intersection area is formed by the content nodes interacting with the area delimited by the closed curve; and a fourth determining unit, configured to determine a content node with a smallest display area in the second candidate node set as the target content node.

In a particular embodiment, the target node determining module comprises: a fifth determining unit, configured to determine a third candidate node set according to the document object model tree if the coordinates of the at least one touch point are coordinates of a closed curve, in which the third candidate node set comprises content nodes with a largest ratio between an intersection area and an area delimited by the closed curve, in which the intersection area is formed by the content nodes interacting with the area delimited by the closed curve; and a sixth determining unit, configured to determine a content node with a largest display area in the third candidate node set as the target content node.

In a particular embodiment, the apparatus further comprises: a detecting module, configured to detect whether an average display area of characters in a plain text node of the webpage is less than a preset area threshold before the webpage adjusting instruction is received, in which the instruction receiving module is configured to perform the step of receiving the webpage adjusting instruction if the average display area of characters in the plain text node of the webpage is less than the preset area threshold.

According to a third aspect, the invention, relates to an electronic device, comprising: a processor; and a memory for storing executable instructions for the processor; in which the processor is configured to: receive a webpage adjusting instruction generated when detecting a touch operation on a webpage currently displayed, and containing coordinates of at least one touch point; determine a target content node from all content nodes of the webpage according to the coordinates of the at least one touch point and a document object model tree of the webpage; and adjust a center of a display area corresponding to the target content node to a center of a screen.

In one particular embodiment, the steps of the method for adjusting a webpage are determined by computer program instructions.

Consequently, according to a fourth aspect, the invention is also directed to a computer program for executing the steps of a method for adjusting a webpage as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Technical solutions provided by embodiments of the present disclosure have following advantageous effects.

The webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node can be adjusted to the center of the screen through only one action, thus solving the problem that the user needs to carry out multiple adjustments to adjust one piece of content of the webpage to a location suitable for browsing in the related art, simplifying user operation and saving user's time.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for adjusting a webpage according to an exemplary embodiment of the present disclosure.
Fig. 2 is a flow chart showing a method for adjusting a webpage according to another exemplary embodiment of the present disclosure.
Fig. 3 is a schematic diagram illustrating a user operation according to another exemplary embodiment of the present disclosure.
Fig. 4 is a schematic diagram illustrating a user operation according to another exemplary embodiment of the present disclosure.
Fig. 5 is a schematic diagram illustrating a user operation according to another exemplary embodiment of the present disclosure.
Fig. 6 is a schematic diagram illustrating an adjusted webpage according to another exemplary embodiment of the present disclosure.
Fig. 7 is a flow chart showing a method for adjusting a webpage according to yet another exemplary embodiment of the present disclosure.
Fig. 8 is a schematic diagram illustrating an apparatus for adjusting a webpage according to an exemplary embodiment of the present disclosure.
Fig. 9 is a schematic diagram illustrating an apparatus for adjusting a webpage according to another exemplary embodiment of the present disclosure.
Fig. 10 is a block diagram of an electronic device according to an exemplary embodiment of the present disclosure.
Fig. 11 is a block diagram of an electronic device according to an exemplary embodiment of the present disclosure.

With above drawings, embodiments disclosed by the present disclosure have been presented and detailed descriptions will be provided in the following. These drawings and literal descriptions are not intended to limit a scope of the present disclosure in any way, but to interpret a concept of the present disclosure for those skilled in the related art by referring to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

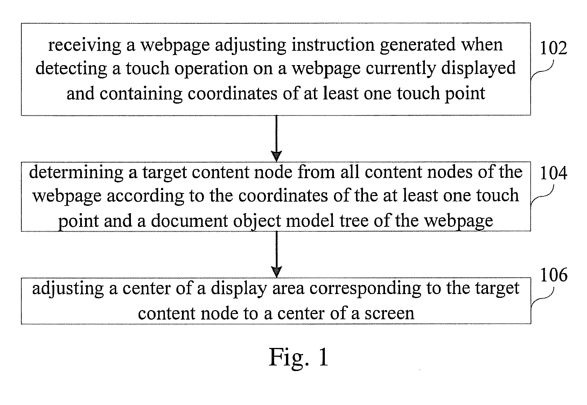

Fig. 1 is a flow chart of a method for adjusting a webpage, according to an exemplary embodiment. The method is used in an electronic device to adjust webpages currently displayed. The electronic device may be an intelligent mobile phone, a tablet computer, an eBook reader, etc. Referring to Fig. 1, the method includes the following steps.

In step 102, a webpage adjusting instruction generated when detecting a touch operation on a webpage currently displayed and containing coordinates of at least one touch point is received.

In step 104, a target content node is determined from all content nodes of the webpage according to the coordinates of the at least one touch point and a document object model tree of the webpage.

In step 106, a center of a display area corresponding to the target content node is adjusted to a center of a screen.

With the method for adjusting a webpage according to embodiments of the present disclosure, the webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node can be adjusted to the center of the screen through only one action, thus solving the problem that a user needs to carry out multiple adjustments to adjust one piece of content of the webpage to a location suitable for browsing in the related art, simplifying user operation and saving user's time.

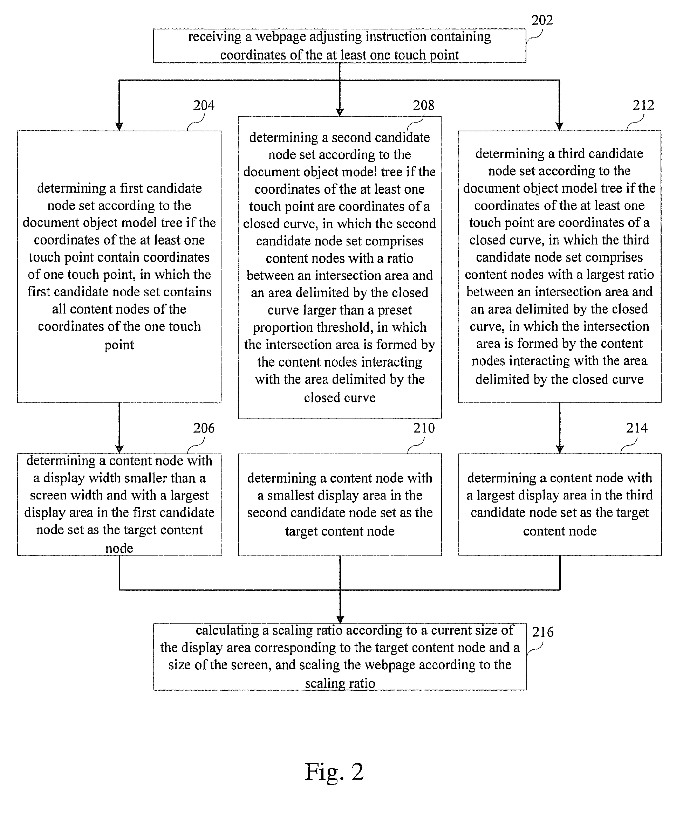

Fig. 2 is a flow chart of a method for adjusting a webpage, according to another exemplary embodiment. The method is used in an electronic device to adjust webpages currently displayed. The electronic device may be an intelligent mobile phone, a tablet computer, an eBook reader, etc. Referring to Fig. 2, the method includes the following steps.

In step 202, a webpage adjusting instruction containing coordinates of at least one touch point is received.

The webpage adjusting instruction is generated when it is detected that a user performs a touch operation on the webpage currently displayed, in which the touch operation may be a click operation or a slide operation. For instance, if the touch operation is the click operation, the webpage adjusting instruction contains coordinates of a touch point corresponding to a click position of the click operation. If the touch operation is the slide operation and a track of the slide operation is a closed curve, the webpage adjusting instruction contains coordinates of all touch points on the closed curve.

In step 204, a first candidate node set is determined according to a document object model tree if the coordinates of the at least one touch point contain coordinates of one touch point, in which the first candidate node set contains all content nodes of the coordinates of the one touch point.

For the webpage displayed in the screen, each visible content node in the document object model tree of the webpage is corresponding to one rectangular display area in the screen. Some big visible content nodes may further contain one or more child nodes, which are displayed as one or more small rectangular display areas contained in a corresponding large rectangular display area in the screen.

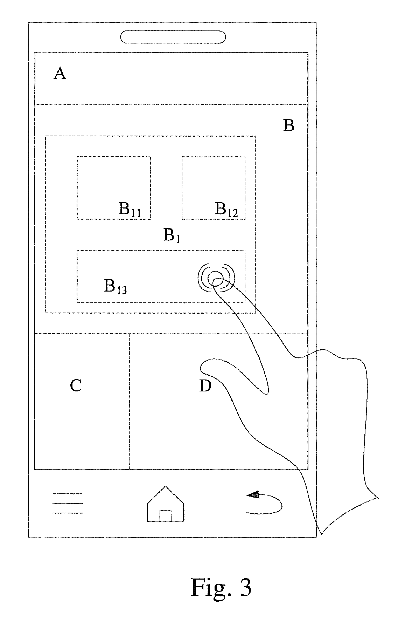

The electronic device is the intelligent mobile phone, for instance. Referring to Fig. 3 which is a schematic diagram illustrating a user operation, the webpage currently displayed displays four first grade visible content nodes corresponding to four rectangular areas A, B, C and D respectively, in which the first grade visible content node corresponding to the rectangular area B contains a second grade visible content node corresponding to a rectangular area B1, and the second grade visible content node corresponding to the rectangular area B₁ contains three third grade visible content nodes corresponding to three rectangular areas B₁₁, B₁₂ and B₁₃ respectively.

When the user clicks on the webpage, a webpage adjusting instruction containing coordinates of a touch point corresponding to a click position will be generated. The intelligent mobile phone determines that the coordinates of the touch point is located in the rectangular area B₁₃ according to the coordinates of the touch point and the document object model tree. Then, areas containing the coordinates of the touch point are determined to be the rectangular areas B, B₁ and B₁₃. The intelligent mobile phone determines a set comprising content nodes corresponding to the rectangular areas B, B₁ and B₁₃ to be the first candidate node set.

In step 206, a content node with a display width smaller than a screen width and with a largest display area in the first candidate node set is determined as the target content node.

Taking Fig. 3 as an example, a width of the rectangular area B is the same as the screen width, then display widths of content nodes corresponding to the rectangular areas B₁ and B₁₃ respectively in the first candidate node set are smaller than the screen width. As an area of B₁ is larger than an area of B₁₃, the intelligent mobile phone chooses the content node corresponding to the rectangular area B₁ to be the target content node.

In step 208, a second candidate node set is determined according to the document object model tree if the coordinates of the at least one touch point are coordinates of the closed curve, in which the second candidate node set comprises content nodes with a ratio between an intersection area and an area delimited by the closed curve larger than a preset proportion threshold, in which the intersection area is formed by the content nodes interacting with the area delimited by the closed curve.

The preset proportion threshold is preset by developers. For example the preset proportion threshold may be 50%, 70% or 80%, which is not limited in exemplary embodiments of the present disclosure.

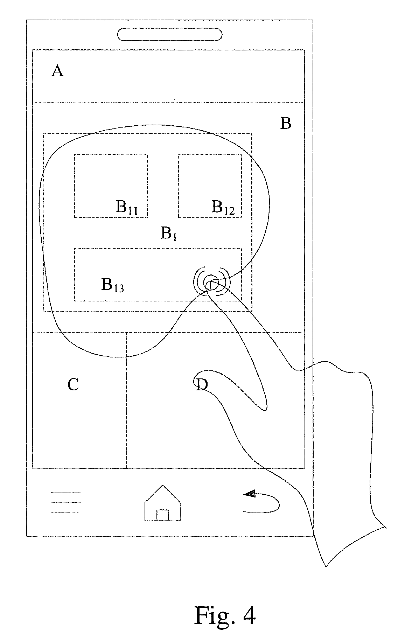

The electronic device is the intelligent mobile phone and the preset proportion threshold is 50%, for instance. Referring to Fig. 4 which is a schematic diagram illustrating a user operation, display areas corresponding to all visible content nodes of the webpage have been displayed in the screen of the intelligent mobile phone at an initial time, and a track of a slide operation carried out by the user is the closed curve. The webpage adjusting instruction generated when the user carries out the slide operation contains coordinates of all touch points on the track of the slide operation. The intelligent mobile phone determines that display areas covered by the closed curve are all display areas except area A (that are rectangular areas B, B₁, B₁₁, B₁₂, B₁₃, C and D) according to the coordinates of the touch points on the track of the slide operation and the document object model tree. As both a ratio between an intersection area (formed by the rectangular area B interacting with the area delimited by the closed curve) and the area delimited by the closed curve and a ratio between an intersection area (formed by the rectangular area B₁ interacting with the area delimited by the closed curve) and the area delimited by the closed curve are larger than 50%, the intelligent mobile phone determines a set comprising content nodes corresponding to the rectangular areas B and B₁ as the second candidate node set.

In step 210, a content node with a smallest display area in the second candidate node set is determined as the target content node.

Taking Fig. 4 as an example, as the area of B₁ is smaller than an area of B, the intelligent mobile phone determines the content node corresponding to the rectangular area B to be the target content node.

In step 212, a third candidate node set is determined according to the document object model tree if the coordinates of the at least one touch point are coordinates of the closed curve, in which the third candidate node set comprises content nodes with a largest ratio between an intersection area and the area delimited by the closed curve, in which the intersection area is formed by the content nodes interacting with the area delimited by the closed curve.

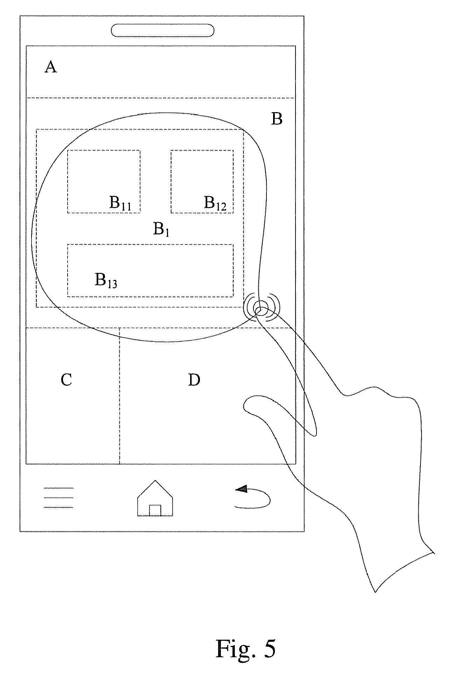

The electronic device is the intelligent mobile phone, for instance. Referring to Fig. 5 which is a schematic diagram illustrating a user operation, display areas corresponding to all the visible content nodes of the webpage have been displayed in the screen of the intelligent mobile phone at an initial time, and a track of a slide operation carried out by the user is the closed curve. The webpage adjusting instruction generated when the user carries out the slide operation contains coordinates of all touch points on the track of the slide operation. The intelligent mobile phone determines that display areas covered by the closed curve are all display areas except area A (that are the rectangular areas B, B₁, B₁₁, B₁₂, B₁₃, C and D) according to coordinates of the touch points on the track of the slide operation and the document object model tree. As there are three content nodes (corresponding to the rectangular areas B₁₁, B₁₂ and B₁₃ respectively) with a ratio between an intersection area and the area delimited by the closed curve is the largest (100%), in which the intersection area is formed by the rectangular areas B₁₁, B₁₂ and B₁₃ interacting with the area delimited by the closed curve respectively, the intelligent mobile phone determines a set comprising content nodes corresponding to the rectangular areas B₁₁, B₁₂ and B₁₃ as the third candidate node set.

In step 214, a content node with a largest display area in the third candidate node set is determined as the target content node.

Taking Fig. 5 as an example, as an area of B₁₃ is larger than both an area of B₁₁ and an area of B₁₂, the intelligent mobile phone determines the content node corresponding to the rectangular area B₁₃ to be the target content node.

In step 216, a scaling ratio is calculated according to a current size of a display area corresponding to the target content node and a size of the screen, and the webpage is scaled according to the scaling ratio.

The electronic device can preset an optimum ratio of a scaled display area corresponding to the target content node to the screen. For instance, the electronic device may preset an optimum ratio of a width of the scaled display area corresponding to the target content node to the screen width, or preset an optimum ratio of a height of the scaled display area corresponding to the target content node to a height of the screen. The optimum ratio may be 80%, 100%, 120% or other values, which is not limited in exemplary embodiments of the present disclosure.

The optimum ratio of the width of the scaled display area corresponding to the target content node to the screen width is preset to 100%, for instance. If a current width of the display area corresponding to the target content node is 5 and the screen width is 10, the scaling ratio will be +100% (that is, zooming in by 100%). If the current width of the display area corresponding to the target content node is 20 and the screen width is 10, the scaling ratio will be -50% (that is, zooming out by 50%).

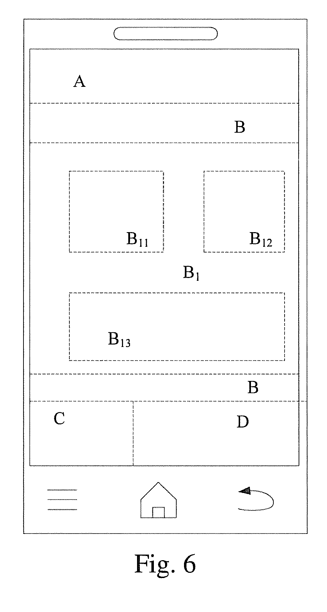

Taking the webpage shown in the schematic diagram of user operation illustrated in any of Fig. 3-Fig. 5 as an example, if the intelligent mobile phone determines that the target content node is the visible content node corresponding to the rectangular area B₁ through steps 204-206, steps 208-210 or steps 212-214, a center of the rectangular area B₁ will be adjusted to the center of the screen and the width of the rectangular area B₁ will be adjusted to the screen width according to the scaling ratio calculated. The schematic diagram of an adjusted webpage is illustrated in Fig. 6.

With the method for adjusting a webpage according to embodiments of the present disclosure, the webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node can be adjusted to the center of the screen through only one action, thus solving the problem that the user needs to carry out multiple adjustments to adjust one piece of content of the webpage to a location suitable for browsing in the related art, simplifying user operation and saving user's time.

Moreover, with the method for adjusting a webpage according to embodiments of the present disclosure, the scaling ratio is calculated according to the current size of the display area corresponding to the target content node and the size of the screen, and the webpage is scaled according to the scaling ratio, thus adjusting the display area corresponding to the target content node to a better size for browsing, further improving user experience and simplifying user operation.

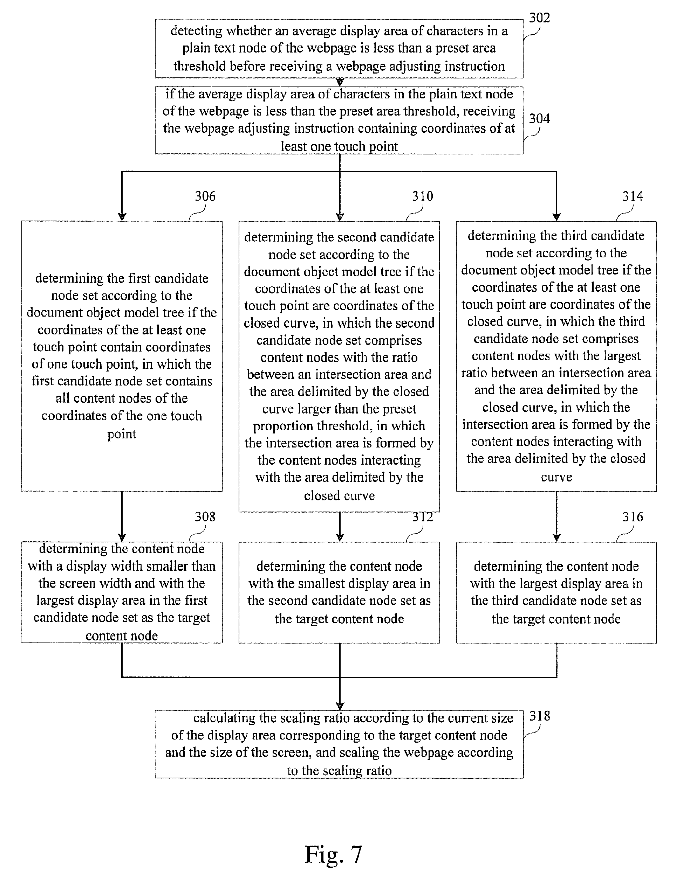

Fig. 7 is a flow chart showing a method for adjusting a webpage, according to yet another exemplary embodiment. The method is used in an electronic device to adjust webpages currently displayed. The electronic device may be an intelligent mobile phone, a tablet computer, an eBook reader, etc. Referring to Fig. 7, the method includes the following steps.

In step 302, whether an average display area of characters in a plain text node of the webpage is less than a preset area threshold is detected.

As certain processing resources will be occupied and certain electric energy will be consumed when the webpage is scaled and moved, not all webpages displayed in a portable electronic device need to be scaled or moved in practice. To save processing resources and electric energy of the electronic device, a webpage adjusting instruction is responded only to webpages needing to be adjusted. Specifically, the electronic device detects whether the average display area of characters in the plain text node of the webpage currently displayed is less than the preset area threshold. If yes, a display area of the characters by default is too small to display and the webpage currently displayed needs to be adjusted. Otherwise, the webpage currently displayed will be displayed without adjustment.

The preset area threshold may be a fixed value or determined according to a resolution and the size of the screen of the electronic device. For instance, the developers can determine a set of webpages with no need for adjustment through manual annotation, and can calculate an average display area s₁ of characters in a plain text node of each webpage of the set. The electronic device obtains an average display area s₂ of characters in a plain text node of a current webpage firstly and then judges whether the s₂ is less than k*s₁, in which k is a scaling parameter preset by the developers or determined according to the resolution and the size of the screen of the electronic device, which is not limited in exemplary embodiments of the present disclosure.

In step 304, if the average display area of characters in the plain text node of the webpage is less than the preset area threshold, a webpage adjusting instruction containing coordinates of at least one touch point is received.

The webpage adjusting instruction is generated when it is detected that a user performs a touch operation on the webpage currently displayed, in which the touch operation may be a click operation or a slide operation. For instance, if the touch operation is the click operation, the webpage adjusting instruction contains coordinates of a touch point corresponding to a click position of the click operation. If the touch operation is the slide operation and a track of the slide operation is a closed curve, the webpage adjusting instruction contains coordinates of all touch points on the closed curve.

In step 306, a first candidate node set is determined according to a document object model tree if the coordinates of the at least one touch point contain coordinates of one touch point, in which the first candidate node set contains all content nodes of the coordinates of the one touch point.

For the webpage displayed in the screen, each visible content node in the document object model tree of the webpage is corresponding to one rectangular display area in the screen. Some big visible content nodes may further contain one or more child nodes, which are displayed as one or more small rectangular display areas contained in a corresponding large rectangular display area in the screen.

The electronic device is the intelligent mobile phone, for instance. Referring to

Fig. 3, the webpage currently displayed displays four first grade visible content nodes corresponding to four rectangular areas A, B, C and D respectively, in which the first grade visible content node corresponding to the rectangular area B contains a second grade visible content node corresponding to a rectangular area B1, and the second grade visible content node corresponding to the rectangular area B₁ contains three third grade visible content nodes corresponding to three rectangular areas B₁₁, B₁₂ and B₁₃ respectively.

When the user clicks on the webpage, a webpage adjusting instruction containing coordinates of a touch point corresponding to a click position will be generated. The intelligent mobile phone determines that the coordinates of the touch point is located in the rectangular area B₁₃ according to the coordinates of the touch point and the document object model tree. Then, areas containing the coordinates of the touch point are determined to be the rectangular areas B, B₁ and B₁₃. The intelligent mobile phone determines a set comprising content nodes corresponding to the rectangular areas B, B₁ and B₁₃ to be the first candidate node set.

In step 308, a content node with a display width smaller than a screen width and with a largest display area in the first candidate node set is determined as the target content node.

Taking Fig. 3 as an example, a width of the rectangular area B is the same as the screen width, then display widths of content nodes corresponding to the rectangular areas B₁ and B₁₃ respectively in the first candidate node set are smaller than the screen width. As an area of B₁ is larger than an area of B₁₃, the intelligent mobile phone chooses the content node corresponding to the rectangular area B₁ to be the target content node.

In step 310, a second candidate node set is determined according to the document object model tree if the coordinates of the at least one touch point are coordinates of the closed curve, in which the second candidate node set comprises content nodes with a ratio between an intersection area and an area delimited by the closed curve larger than a preset proportion threshold, in which the intersection area is formed by the content nodes interacting with the area delimited by the closed curve.

The preset proportion threshold is preset by developers. For example the preset proportion threshold may be 50%, 70% or 80%, which is not limited in exemplary embodiments of the present disclosure.

The electronic device is the intelligent mobile phone and the preset proportion threshold is 50%, for instance. Referring to Fig. 4, display areas corresponding to all visible content nodes of the webpage have been displayed in the screen of the intelligent mobile phone at an initial time, and a track of a slide operation carried out by the user is the closed curve. The webpage adjusting instruction generated when the user carries out the slide operation contains coordinates of all touch points on the track of the slide operation. The intelligent mobile phone determines that display areas covered by the closed curve are all display areas except area A (that are rectangular areas B, B₁, B₁₁, B₁₂, B₁₃, C and D) according to the coordinates of the touch points on the track of the slide operation and the document object model tree. As both a ratio between an intersection area (formed by the rectangular area B interacting with the area delimited by the closed curve) and the area delimited by the closed curve and a ratio between an intersection area (formed by the rectangular area B₁ interacting with the area delimited by the closed curve) and the area delimited by the closed curve are larger than 50%, the intelligent mobile phone determines a set comprising content nodes corresponding to the rectangular areas B and B₁ as the second candidate node set.

In step 312, a content node with a smallest display area in the second candidate node set is determined as the target content node.

Taking Fig. 4 as an example, as the area of B₁ is smaller than an area of B, the intelligent mobile phone determines the content node corresponding to the rectangular area B to be the target content node.

In step 314, a third candidate node set is determined according to the document object model tree if the coordinates of the at least one touch point are coordinates of the closed curve, in which the third candidate node set comprises content nodes with a largest ratio between an intersection area and the area delimited by the closed curve, in which the intersection area is formed by the content nodes interacting with the area delimited by the closed curve.

The electronic device is the intelligent mobile phone, for instance. Referring to Fig. 5, display areas corresponding to all the visible content nodes of the webpage have been displayed in the screen of the intelligent mobile phone at an initial time, and a track of a slide operation carried out by the user is the closed curve. The webpage adjusting instruction generated when the user carries out the slide operation contains coordinates of all touch points on the track of the slide operation. The intelligent mobile phone determines that display areas covered by the closed curve are all display areas except area A (that are the rectangular areas B, B₁, B₁₁, B₁₂, B₁₃, C and D) according to coordinates of the touch points on the track of the slide operation and the document object model tree. As there are three content nodes (corresponding to the rectangular areas B₁₁, B₁₂ and B₁₃ respectively) with a ratio between an intersection area and the area delimited by the closed curve is the largest (100%), in which the intersection area is formed by the rectangular areas B₁₁, B₁₂ and B₁₃ interacting with the area delimited by the closed curve respectively, the intelligent mobile phone determines a set comprising content nodes corresponding to the rectangular areas B₁₁, B₁₂ and B₁₃ as the third candidate node set.

In step 316, a content node with a largest display area in the third candidate node set is determined as the target content node.

Taking Fig. 5 as an example, as an area of B₁₃ is larger than both an area of B₁₁ and an area of B₁₂, the intelligent mobile phone determines the content node corresponding to the rectangular area B₁₃ to be the target content node.

In step 318, a scaling ratio is calculated according to a current size of a display area corresponding to the target content node and a size of the screen, and the webpage is scaled according to the scaling ratio.

The electronic device can preset an optimum ratio of a scaled display area corresponding to the target content node to the screen. For instance, the electronic device may preset an optimum ratio of a width of the scaled display area corresponding to the target content node to the screen width, or preset an optimum ratio of a height of the scaled display area corresponding to the target content node to a height of the screen. The optimum ratio may be 80%, 100%, 120% or other values, which is not limited in exemplary embodiments of the present disclosure.

The optimum ratio of the width of the scaled display area corresponding to the target content node to the screen width is preset to 100%, for instance. If a current width of the display area corresponding to the target content node is 5 and the screen width is 10, the scaling ratio will be +100% (that is, zooming in by 100%). If the current width of the display area corresponding to the target content node is 20 and the screen width is 10, the scaling ratio will be -50% (that is, zooming out by 50%).

Taking the webpage shown in the schematic diagram of user operation illustrated in any of Fig. 3-Fig. 5 as an example, if the intelligent mobile phone determines that the target content node is the visible content node corresponding to the rectangular area B₁ through steps 306-308, steps 310-312 or steps 314-316, a center of the rectangular area B₁ will be adjusted to the center of the screen and the width of the rectangular area B₁ will be adjusted to the screen width according to the scaling ratio calculated. The schematic diagram of an adjusted webpage is illustrated in Fig. 6.

With the method for adjusting a webpage according to embodiments of the present disclosure, the webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node can be adjusted to the center of the screen through only one action, thus solving the problem that the user needs to carry out multiple adjustments to adjust one piece of content of the webpage to a location suitable for browsing in the related art, simplifying user operation and saving user's time.

Moreover, with the method for adjusting a webpage according to embodiments of the present disclosure, the scaling ratio is calculated according to the current size of the display area corresponding to the target content node and the size of the screen, and the webpage is scaled according to the scaling ratio, thus adjusting the display area corresponding to the target content node to a better size for browsing, further improving user experience and simplifying user operation.

Finally, with the method for adjusting a webpage according to embodiments of the present disclosure, whether the average display area of characters in the plain text node of the webpage is less than the preset area threshold is detected before receiving the webpage adjusting instruction, and if the average display area of characters in the plain text node of the webpage is less than the preset area threshold, the webpage adjusting instruction is received, thus avoiding adjusting webpages which do not need adjustment and saving the processing resources and electric energy of the electronic device.

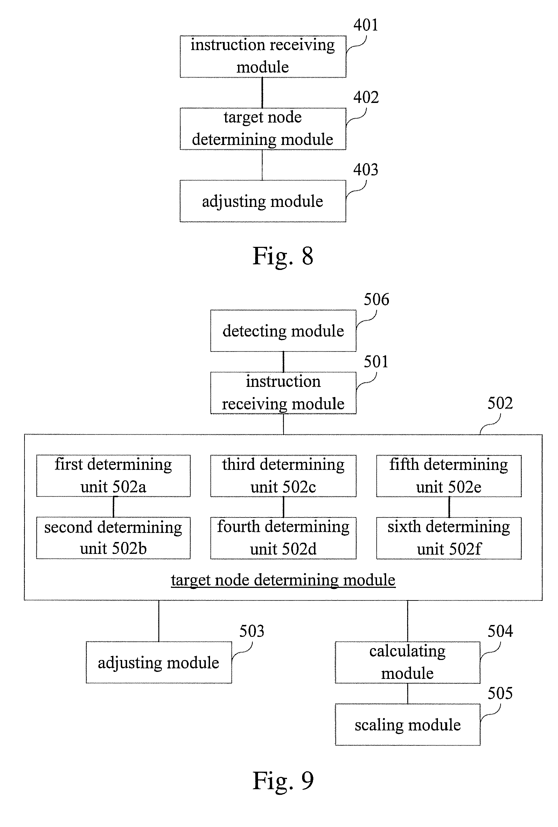

Fig. 8 is a schematic diagram illustrating an apparatus for adjusting a webpage, according to an exemplary embodiment. The apparatus for adjusting the webpage is used in an electronic device to perform any method shown in Fig. 1, Fig. 2 and Fig. 7. The electronic device may be an intelligent mobile phone, a tablet computer, an eBook reader, etc. Referring to Fig. 8, the apparatus for adjusting the webpage includes an instruction receiving module 401, a target node determining module 402 and an adjusting module 403.

The instruction receiving module 401 is configured to receive a webpage adjusting instruction generated when detecting a touch operation on a webpage currently displayed, and containing coordinates of at least one touch point.

The target node determining module 402 is configured to determine a target content node from all content nodes of the webpage according to the coordinates of the at least one touch point and a document object model tree of the webpage.

The adjusting module 403 is configured to adjust a center of a display area corresponding to the target content node to a center of a screen.

With the apparatus for adjusting a webpage according to embodiments of the present disclosure, the webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node may be adjusted to the center of the screen through only one action, thus solving the problem that a user needs to carry out multiple adjustments to adjust one piece of content of the webpage to a location suitable for browsing in the related art, simplifying user operation and saving user's time.

Fig. 9 is a schematic diagram illustrating an apparatus for adjusting a webpage, according to another exemplary embodiment. The apparatus for adjusting the webpage is used in the electronic device to perform any method shown in Fig. 1, Fig. 2 and Fig. 7. The electronic device may be an intelligent mobile phone, a tablet computer, an eBook reader, etc. Referring to Fig. 9, the apparatus for adjusting the webpage includes an instruction receiving module 501, a target node determining module 502 and an adjusting module 503.

The instruction receiving module 501 is configured to receive a webpage adjusting instruction generated when detecting a touch operation on a webpage currently displayed, and containing coordinates of at least one touch point.

The target node determining module 502 is configured to determine a target content node from all content nodes of the webpage according to the coordinates of the at least one touch point and a document object model tree of the webpage.

The adjusting module 503 is configured to adjust a center of a display area corresponding to the target content node to a center of a screen.

The apparatus further includes a calculating module 504 and a scaling module 505.

The calculating module 504 is configured to calculate a scaling ratio according to a current size of the display area corresponding to the target content node and a size of the screen.

The scaling module 505 is configured to scale the webpage according to the scaling ratio.

The target node determining module 502 includes a first determining unit 502a and a second determining unit 502b.

The first determining unit 502a is configured to determine a first candidate node set according to the document object model tree if the coordinates of the at least one touch point contain coordinates of one touch point, in which the first candidate node set contains all content nodes of the coordinates of the one touch point.

The second determining unit 502b is configured to determine a content node with a display width smaller than a screen width and with a largest display area in the first candidate node set as the target content node.

The target node determining module 502 includes a third determining unit 502c and a fourth determining unit 502d.

The third determining unit 502c is configured to determine a second candidate node set according to the document object model tree if the coordinates of the at least one touch point are coordinates of a closed curve, in which the second candidate node set comprises content nodes with a ratio between an intersection area and an area delimited by the closed curve larger than a preset proportion threshold, in which the intersection area is formed by the content nodes interacting with the area delimited by the closed curve.

The fourth determining unit 502d is configured to determine a content node with a smallest display area in the second candidate node set as the target content node.

The target node determining module 502 includes a fifth determining unit 502e and a sixth determining unit 502f.

The fifth determining unit 502e is configured to determine a third candidate node set according to the document object model tree if the coordinates of the at least one touch point are coordinates of a closed curve, in which the third candidate node set comprises content nodes with a largest ratio between an intersection area and an area delimited by the closed curve, in which the intersection area is formed by the content nodes interacting with the area delimited by the closed curve.

The sixth determining unit 502f is configured to determine a content node with a largest display area in the third candidate node set as the target content node.

The apparatus further includes a detecting module 506.

The detecting module 506 is configured to detect whether an average display area of characters in a plain text node of the webpage is less than a preset area threshold before a webpage adjusting instruction is received.

The instruction receiving module 501 is configured to perform the step of receiving the webpage adjusting instruction if a result of the detecting module 506 is that the average display area of characters in the plain text node of the webpage is less than the preset area threshold.

With the apparatus for adjusting a webpage according to embodiments of the present disclosure, the webpage adjusting instruction containing coordinates of the at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node may be adjusted to the center of the screen through only one action, thus solving the problem that the user needs to carry out multiple adjustments to adjust one piece of content of the webpage to a location suitable for browsing in the related art, simplifying user operation and saving user's time.

Moreover, with the apparatus for adjusting a webpage according to embodiments of the present disclosure, the scaling ratio is calculated according to the current size of the display area corresponding to the target content node and the size of the screen, and the webpage is scaled according to the scaling ratio, thus adjusting the display area corresponding to the target content node to a better size for browsing, further improving user experience and simplifying user operation.

Finally, with the apparatus for adjusting a webpage according to embodiments of the present disclosure, whether the average display area of characters in the plain text node of the webpage is less than the preset area threshold is detected before receiving the webpage adjusting instruction, and if the average display area of characters in the plain text node of the webpage is less than the preset area threshold, the webpage adjusting instruction is received, thus avoiding adjusting webpages which do not need adjustment and saving the processing resources and electric energy of the electronic device.

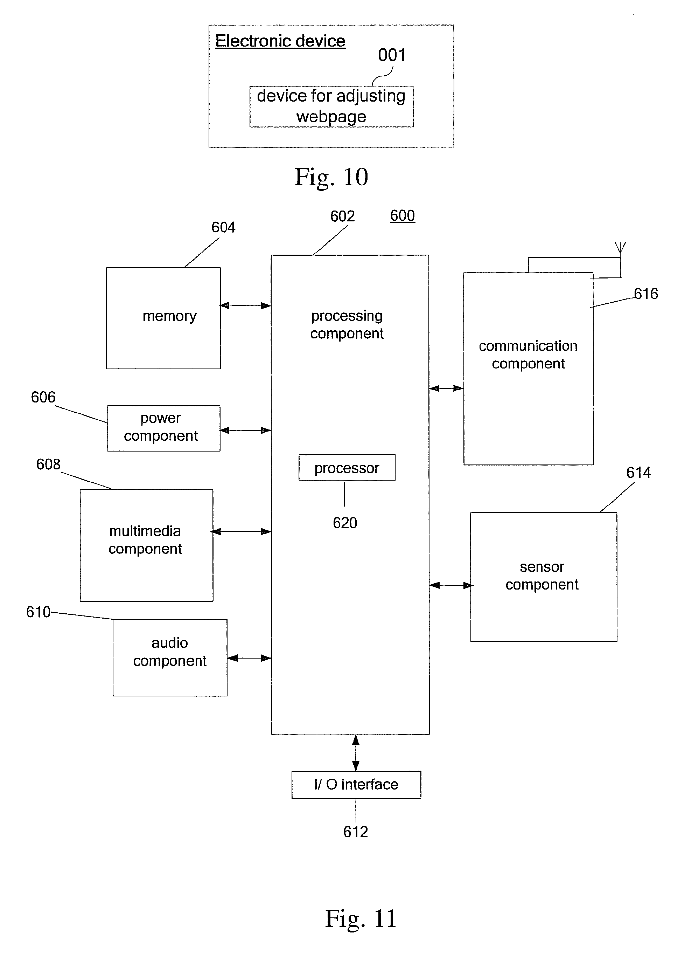

Fig. 10 is a block diagram of an electronic device, according to an exemplary embodiment. The electronic device is used to adjust a webpage currently displayed. For example, the electronic device may be an intelligent mobile phone, a tablet computer, an eBook reader, and the like.

Referring to Fig. 10, the electronic device includes an apparatus for adjusting a webpage 001, as illustrated in Fig. 8 or Fig. 9.

With the electronic device according to embodiments of the present disclosure, the webpage adjusting instruction containing coordinates of at least one touch point is received, the target content node is determined from all content nodes of the webpage according to the coordinates of the at least one touch point and the document object model tree of the webpage, and the center of the display area corresponding to the target content node is adjusted to the center of the screen, so the display area corresponding to the target content node may be adjusted to the center of the screen through only one action, thus solving the problem that the user needs to carry out multiple adjustments to adjust one piece of content of the webpage to a location suitable for browsing in the related art, simplifying user operation and saving user's time.

Moreover, with the electronic device according to embodiments of the present disclosure, the scaling ratio is calculated according to the current size of the display area corresponding to the target content node and the size of the screen, and the webpage is scaled according to the scaling ratio, thus adjusting the display area corresponding to the target content node to a better size for browsing, further improving user experience and simplifying user operation.

Finally, with the electronic device according to embodiments of the present disclosure, whether the average display area of characters in the plain text node of the webpage is less than the preset area threshold is detected before receiving the webpage adjusting instruction, and if the average display area of characters in the plain text node of the webpage is less than the preset area threshold, the webpage adjusting instruction is received, thus avoiding adjusting webpages which do not need adjustment and saving the processing resources and electric energy of the electronic device.

Fig. 11 is a block diagram of an electronic device 600, according to an exemplary embodiment. For example, the electronic device 600 may be a mobile phone, a computer, a digital broadcasting terminal, a message sending and receiving device, a game console, a tablet device, a medical equipment, a fitness facility and a personal digital assistant, and the like.

Referring to Fig. 11, the electronic device 600 may include one or more of following components: a processing component 602, a memory 604, a power component 606, a multimedia component 608, an audio component 610, an input/ output (I/ O) interface 612, a sensor component 614 and a communication component 616.

The processing component 602 typically controls overall operations of the electronic device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the electronic device 600. Examples of such data include instructions for any applications or methods operated on the electronic device 600, contact data, phonebook data, messages, pictures, videos, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The memory 604 further stores one or more modules, which are configured to be executed by one or more processors 620 to perform all or part of the steps in any method in Fig. 1, Fig. 2 or Fig. 7.

The power component 606 provides power to various components of the electronic device 600. The power component 606 may include a power management system, one or more power sources, and any other components associated with the generation, management, and distribution of power in the electronic device 600.

The multimedia component 608 includes a screen providing an output interface between the electronic device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the electronic device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the electronic device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the electronic device 600. For instance, the sensor component 614 may detect an open/closed status of the electronic device 600, relative positioning of components, e.g., the display and the keypad, of the electronic device 600, a change in position of the electronic device 600 or a component of the electronic device 600, a presence or absence of user contact with the electronic device 600, an orientation or an acceleration/deceleration of the electronic device 600, and a change in temperature of the electronic device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate wired or wireless communication between the electronic device 600 and other devices. The electronic device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the electronic device 600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for adjusting a webpage, comprising:
receiving (102) a webpage adjusting instruction generated when detecting a touch operation on a webpage currently displayed and containing coordinates of at least one touch point;
determining (104) a target content node from all content nodes of the webpage according to the coordinates of the at least one touch point and a document object model tree of the webpage; and
adjusting (106) a center of a display area corresponding to the target content node to a center of a screen.

2. The method for adjusting a webpage according to claim 1, further comprising:
calculating (216) a scaling ratio according to a current size of the display area corresponding to the target content node and a size of the screen; and
scaling (216) the webpage according to the scaling ratio.

3. The method for adjusting a webpage according to claim 1 or 2, wherein determining a target content node from all content nodes of the webpage according to the coordinates of the at least one touch point and a document object model tree of the webpage comprises:
determining (204) a first candidate node set according to the document object model tree if the coordinates of the at least one touch point contain coordinates of one touch point, in which the first candidate node set contains all content nodes of the coordinates of the one touch point; and
determining (206) a content node with a display width smaller than a screen width and with a largest display area in the first candidate node set as the target content node.

4. The method for adjusting a webpage according to anyone of claims 1 to 3, wherein determining a target content node from all content nodes of the webpage according to the coordinates of the at least one touch point and a document object model tree of the webpage comprises:
determining (208) a second candidate node set according to the document object model tree if the coordinates of the at least one touch point are coordinates of a closed curve, in which the second candidate node set comprises content nodes with a ratio between an intersection area and an area delimited by the closed curve larger than a preset proportion threshold, in which the intersection area is formed by the content nodes interacting with the area delimited by the closed curve; and
determining (210) a content node with a smallest display area in the second candidate node set as the target content node.

5. The method for adjusting a webpage according to anyone of claims 1 to 4, wherein determining a target content node from all content nodes of the webpage according to the coordinates of the at least one touch point and a document object model tree of the webpage comprises:
determining (212) a third candidate node set according to the document object model tree if the coordinates of the at least one touch point are coordinates of a closed curve, in which the third candidate node set comprises content nodes with a largest ratio between an intersection area and an area delimited by the closed curve, in which the intersection area is formed by the content nodes interacting with the area delimited by the closed curve; and
determining (214) a content node with a largest display area in the third candidate node set as the target content node.

6. The method for adjusting a webpage according to anyone of claims 1 to 5, further comprising:
detecting (302) whether an average display area of characters in a plain text node of the webpage is less than a preset area threshold before receiving the webpage adjusting instruction; and
if the average display area of characters in the plain text node of the webpage is less than the preset area threshold, performing the step of receiving the webpage adjusting instruction.

7. An apparatus for adjusting a webpage, comprising:
an instruction receiving module (401, 501), configured to receive a webpage adjusting instruction generated when detecting a touch operation on a webpage currently displayed, and containing coordinates of at least one touch point;
a target node determining module (402, 502), configured to determine a target content node from all content nodes of the webpage according to the coordinates of the at least one touch point and a document object model tree of the webpage; and
an adjusting module (403), configured to adjust a center of a display area corresponding to the target content node to a center of a screen.

8. The apparatus of claim 7, further comprising:
a calculating module (504), configured to calculate a scaling ratio according to a current size of the display area corresponding to the target content node and a size of the screen; and
a scaling module (505), configured to scale the webpage according to the scaling ratio.

9. The apparatus of claim 7 or 8, wherein the target node determining module comprises:
a first determining unit (502a), configured to determine a first candidate node set according to the document object model tree if the coordinates of the at least one touch point contain coordinates of one touch point, in which the first candidate node set contains all content nodes of the coordinates of the one touch point; and
a second determining unit (502b), configured to determine a content node with a display width smaller than a screen width and with a largest display area in the first candidate node set as the target content node.

10. The apparatus of anyone of claims 7 to 9, wherein the target node determining module comprises:
a third determining unit (502c), configured to determine a second candidate node set according to the document object model tree if the coordinates of the at least one touch point are coordinates of a closed curve, in which the second candidate node set comprises content nodes with a ratio between an intersection area and an area delimited by the closed curve larger than a preset proportion threshold, in which the intersection area is formed by the content nodes interacting with the area delimited by the closed curve; and
a fourth determining unit (502d), configured to determine a content node with a smallest display area in the second candidate node set as the target content node.

11. The apparatus of anyone of claims 7 to 10, wherein the target node determining module comprises:
a fifth determining unit (502e), configured to determine a third candidate node set according to the document object model tree if the coordinates of the at least one touch point are coordinates of a closed curve, in which the third candidate node set comprises content nodes with a largest ratio between an intersection area and an area delimited by the closed curve, in which the intersection area is formed by the content nodes interacting with the area delimited by the closed curve; and
a sixth determining unit (502f), configured to determine a content node with a largest display area in the third candidate node set as the target content node.

12. The apparatus of anyone of claims 7 to 11, further comprising:
a detecting module (506), configured to detect whether an average display area of characters in a plain text node of the webpage is less than a preset area threshold before the webpage adjusting instruction is received,
wherein the instruction receiving module (501) is configured to perform the step of receiving the webpage adjusting instruction if the average display area of characters in the plain text node of the webpage is less than the preset area threshold.

13. An electronic device (600), comprising:
a processor (620); and
a memory (604) for storing executable instructions for the processor;
in which the processor is configured to:
receive a webpage adjusting instruction generated when detecting a touch operation on a webpage currently displayed, and containing coordinates of at least one touch point;
determine a target content node from all content nodes of the webpage according to the coordinates of the at least one touch point and a document object model tree of the webpage; and
adjust a center of a display area corresponding to the target content node to a center of a screen.

14. A computer program including instructions for executing the steps of a method for adjusting a web page according to any one of claims 1 to 10 when said program is executed by a computer.

15. A recording medium readable by a computer and having recorded thereon a computer program including instructions for executing the steps of a method for adjusting a web page according to any one of claims 1 to 10.
